# FASCICULE DE BREVET EUROPEEN

(11) **EP 2 008 836 B1**
(45) Date de publication et mention de la délivrance du brevet: **16.11.2011**
(21) Numéro de dépôt: 08300221.2
(22) Date de dépôt: 09.06.2008
(51) Int. Cl.: B60B 3/14, B60B 27/00

(54) **Ensemble comprenant une roue montée sur un moyeu qui comporte une portion en creux**
Einheit mit einem Rad, das auf eine Nabe montiert ist, die eine Vertiefung umfasst
Assembly comprising a wheel mounted on a hub comprising a recessed portion

(30) Priorité: 27.06.2007 FR 0704625
(43) Date de publication de la demande: 31.12.2008
(73) Titulaire: Renault, 92109 Boulogne Billancourt (FR)
(72) Inventeur: Bardy, Alexandre, 78180 Montigny ke Bretonneux (FR)

(56) Documents cités:
- WO-A-2005/059386
- DE-A1- 3 822 469
- JP-A- 10 081 103
- US-A- 5 938 292
- US-A1- 2003 102 711

## Description

La présente invention concerne un ensemble comprenant une roue montée sur un moyeu.

Les roues de véhicule automobile comportent un passage central qui sert au montage de la roue sur un moyeu. Le moyeu comporte une partie de fixation qui est montée sur l'essieu, ou la portion d'essieu, transversal au véhicule et reliant deux roues, et une partie de montage qui est insérée dans le passage de la roue. La partie de montage présente, en général, une longueur suffisante pour que, lorsque la roue est montée sur le moyeu sans être fixée, la surface du passage de la roue vient prendre appui sur la surface externe de la partie de montage du moyeu, maintenant ainsi en équilibre la roue sur le moyeu.

Le passage de la roue comporte une portion de support qui fait saillie dans le passage de roue et vient en contact avec une portion de la surface externe de la partie de montage du moyeu. L'eau qui arrive sur la roue, pénètre dans le passage de cette dernière et corrode la surface du passage de la roue ainsi que la surface externe de la partie de montage du moyeu. La corrosion forme alors un boudin qui solidarise le passage de la roue à la partie de montage du moyeu. Le boudin de corrosion empêche la séparation de la roue et du moyeu et l'utilisateur ne peut plus changer sa roue, par exemple, en cas de crevaison, sans avoir recours à un pied de biche ou autre outil susceptible de casser le boudin de corrosion.

Pour remédier à ce problème, le document JP-A-10081103 décrit une roue montée sur un moyeu, qui comprend une partie de montage sur laquelle repose le disque de frein ou le tambour de frein. Cette partie de montage comporte une rainure dans laquelle est insérée une bande en matériau résistant à la corrosion. Le coût de cette solution est très élevé.

Le document US 5 938 292 A décrit un autre ensemble comportant une roue et un moyeu.

Il a également été proposé de réaliser un traitement anti-corrosion sur la partie de montage du moyeu. Là encore, le coût d'un tel traitement est rédhibitoire.

Un but de la présente invention est de fournir une roue montée sur un moyeu qui remédie à tout ou partie des inconvénients précités.

Ce but est atteint au moyen d'un ensemble comportant, de manière connue, une roue et un moyeu, ladite roue comportant, sensiblement en son centre, un passage qui définit une direction axiale et qui présente une portion de support, cylindrique, de même axe que ledit passage et de diamètre réduit pour faire saillie dans ledit passage, ledit moyeu comportant une partie de fixation, adaptée pour être montée sur l'extrémité d'un essieu, ladite portion de fixation se prolongeant selon ladite direction axiale par une partie de montage qui est insérée dans ledit passage et qui comporte, une surface externe, partiellement en contact avec ladite portion de support, et une extrémité libre, opposée à ladite partie de fixation, selon ladite direction axiale. Selon l'invention, une portion périphérique en creux est ménagée dans ladite partie de montage et ladite portion en creux s'étend, selon ladite direction axiale, depuis une première zone située sous ladite portion de support, jusqu'à une seconde zone située au-delà de ladite portion de support, dans la direction de ladite extrémité libre.

La portion en creux peut, selon l'invention, présenter des bords irréguliers et être localement prolongée, dans la direction axiale, par des gorges ou portions en creux secondaires qui s'étendent au-delà de la portion de support, dans la direction de la partie de fixation du moyeu. Dans tous les cas, la portion en creux s'étend sous la portion de support du passage de la roue afin que le boudin de rouille se forme sous la portion de support et ne gêne pas, ainsi, le retrait de la roue du moyeu. Localement, la portion en creux peut s'étendre sous toute la portion de support, et même au-delà comme précité, éliminant ainsi, localement tout contact entre le moyeu et le passage de la roue. La zone de la portion en creux qui s'étend vers l'extrémité libre de la partie de montage de la roue permet de canaliser l'eau entrant dans la roue, vers le dessous de la portion de support du passage de la roue.

Selon un mode de réalisation, ladite portion en creux s'étend, selon ladite direction axiale, depuis sensiblement le milieu de ladite portion de support. Une telle portion en creux permet de former un boudin de corrosion sous la portion de support et de conserver une surface de contact entre le passage de la roue et la partie de montage suffisante pour assurer un bon maintien de la roue sur le moyeu.

Selon une variante qui peut être utilisée dans le mode de réalisation précité, ladite portion en creux s'étend selon ladite direction axiale, jusqu'à ladite extrémité libre de ladite partie de montage de ladite roue.

Avantageusement, ladite portion en creux présente un fond et un bord qui est disposé sous ladite portion de support et la paroi de ladite portion en creux reliant ledit fond audit bord forme une pente comprise entre 50 et 20° par rapport à ladite direction axiale. Une telle pente permet de faciliter le montage de la roue, comme il le sera plus amplement expliqué ultérieurement.

La présente invention, ses caractéristiques et les différents avantages qu'elle procure seront mieux compris à la lecture de la description qui suit d'un mode de réalisation, présenté à titre d'exemple non limitatif, et qui fait référence aux dessins annexés, sur lesquels :
- la figure 1 représente une vue en coupe, selon la direction de l'axe du passage de la roue, d'un mode de réalisation de l'ensemble selon l'invention ; et
- la figure 2 représente un agrandissement d'un détail du mode de réalisation représenté sur la figure 1.

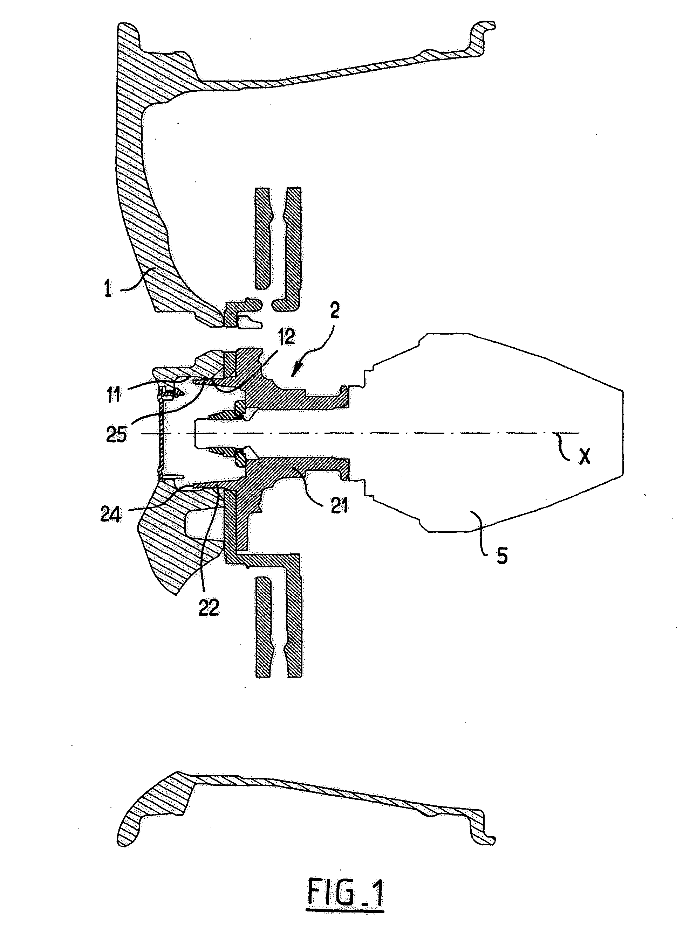

En référence à la figure 1, l'ensemble selon l'invention comporte une roue 1 qui comporte un passage central 11 dans lequel est inséré le moyeu 2. Ce passage définit une direction axiale X. Le passage 11 comporte une portion de support 12 qui est cylindrique et de même axe que le passage 11. Cette portion de support 12 est périphérique et s'étend donc sur toute la section transversale du passage 11. La portion de support 12 présente une section transversale réduite et fait donc saillie vers l'axe du passage 11. Le moyeu 2 comporte une partie de fixation 21, adaptée pour être montée sur un essieu 5, ou une portion d'essieu, reliant deux roues, et une partie de montage de la roue 22. La partie de montage de la roue 22 est sensiblement cylindrique et s'étend selon la direction X définie par le passage central 11 de la roue 1. La partie de montage 22 est solidaire de la partie de fixation 21 et prolonge cette dernière selon la direction axiale X. La partie de montage 22 comporte une extrémité libre 24 qui est opposée à la partie de fixation 21, selon la direction axiale X. Lorsque la partie de montage 22 est insérée dans le passage 11 de la roue 1, l'extrémité libre 24 est disposée à l'intérieur du passage 11 de la roue 1. La surface externe de la partie de montage 22 comporte une zone de contact 25 qui est en contact avec la portion de support 12 formée dans le passage 11 de la roue 1.

La partie de montage 22 supporte également un disque de freinage 7 qui peut être remplacé par un tambour.

La partie de montage 22 peut présenter une longueur, selon la direction axiale X, telle qu'il est possible, pour un utilisateur, d'insérer la portion de montage 22 dans le passage 11 de la roue 1 et de laisser la roue en place sans la fixer, la surface du passage 11 venant prendre appui sur la surface externe de la partie de montage 22, maintenant ainsi la roue en équilibre sur la partie de montage 22.

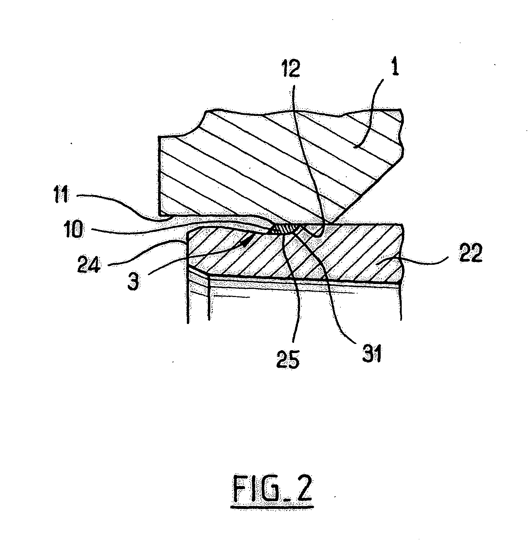

En référence à la figure 2, une portion en creux 3 est ménagée dans la surface externe de la partie de montage 22. Cette partie en creux 3 s'étend sur toute la circonférence de la partie de montage 22 du moyeu 2. Cette portion en creux 3 s'étend selon la direction axiale X, depuis une première zone située sous la portion de support 12 du passage 11, c'est-à-dire au niveau de la zone de contact 25, jusqu'à une seconde zone située, dans la direction de l'extrémité libre 24 de la partie de montage 22, au-delà de la zone de contact 25. Ainsi, lorsque de l'eau vient à entrer dans l'ensemble de l'invention et à pénétrer entre la roue 1 et le moyeu 2, l'eau stagne dans la portion en creux 3 qui canalise alors un boudin de corrosion 10, au fond de la portion en creux 3 et principalement entre le fond de la portion en creux 3 et la portion de support 12. Ainsi, le boudin de corrosion 10 est disposé en dessous de la portion de support 12 du passage 11 de la roue 1 et ne gêne en rien le trajet de la roue 1 lorsqu'un utilisateur retire cette dernière du moyeu 2, en la tirant, selon la direction axiale, dans la direction de l'extrémité libre 24 de la partie de montage 22 du moyeu 2.

La paroi 31 qui relie le fond de la portion en creux 3 avec le bord 32 situé sous la portion de support 12 forme une pente d'environ 30°. Cette inclinaison permet lors du montage de la roue, de ne pas coincer le bord du passage 11 dans la portion en creux 3 et facilite ainsi le montage de la roue. En effet, lors du montage de la roue, le bord du passage 11, situé du côté de la partie de fixation 21, glisse sur la surface externe de la partie de montage 22 du moyeu 2. Lorsque la paroi précitée forme une pente comprise entre 20° et 50° avec la direction axiale, elle permet de faire remonter le bord du passage 11, hors de la portion en creux 3 et de le guider vers l'essieu 5.

Les dimensions de la portion en creux 3 sont ajustées en fonction, notamment des conditions climatiques d'utilisation du véhicule équipé d'un ensemble selon l'invention. Ainsi, on peut former une portion en creux dont la profondeur et la largeur permettent de contenir un boudin de corrosion formé durant une période de trois ou quatre années. Le boudin formé durant ce laps de temps est ainsi contenu sous la portion de support 12. L'utilisateur doit, en général, au bout de ce laps de temps, démonter sa roue, pour changer les pneus, par exemple. Lors du démontage de la roue, le boudin de corrosion est détruit par le passage de la portion de support 12 qui tombe au fond de la portion en creux 3 et le concasse. Une fois la roue remontée sur le moyeu 2, le boudin de corrosion étant éliminé et la portion en creux 3 étant vide, un cycle de trois ou quatre années de corrosion peut à nouveau être entamé.

A titre indicatif, la portion en creux 3 s'étend sur une largeur de 2 à 3 mm sous la portion de support 12, ce qui correspond à la moitié de la largeur de la portion de support 12, mesurée selon la direction axiale X.

Selon un autre mode de réalisation non représenté, la portion en creux 3 s'étend jusqu'à l'extrémité libre 24 de la partie de montage 22 du moyeu 2. Dans ce cas, il est possible d'augmenter la longueur de la partie de montage 22 de manière à ce qu'elle continue à jouer son rôle de mise en équilibre et de maintien de la roue pendant le montage de cette dernière.

Le moyeu 2 étant usiné par tournage, il est facile et peu coûteux de réaliser la portion en creux lors des étapes de la fabrication du moyeu.

## Revendications

1. Ensemble comportant une roue (1) et un moyeu (2), ladite roue comportant, sensiblement en son centre, un passage (11) qui définit une direction axiale (X) et qui présente une portion de support (12), cylindrique, de même axe que ledit passage (11) ledit moyeu (2) comportant une partie de fixation (21), adaptée pour être montée sur l'extrémité d'un essieu (5), ladite portion de fixation (21) se prolongeant selon ladite direction axiale (X) par une partie de montage (22) qui est insérée dans ledit passage (11) et qui comporte, une surface externe, partiellement en contact avec ladite portion de support (12), et une extrémité libre (24), opposée à ladite partie de fixation (21), selon ladite direction axiale (X), une portion périphérique en creux (3) étant ménagée dans ladite partie de montage (22), **caractérisé en ce que** ladite portion en creux (3) s'étend, selon ladite direction axiale (X), depuis une première zone située sous ladite portion de support (12) jusqu'à une seconde zone située au-delà de ladite portion de support (12), dans la direction de ladite extrémité libre (24) et **en ce que** ladite portion de support (12) est de diamètre réduit pour faire saillie dans ledit passage (11)

2. Ensemble selon la revendication 1, **caractérisé en ce que** ladite portion en creux (3) s'étend, selon ladite direction axiale (X), depuis sensiblement le milieu de ladite portion de support (12).

3. Ensemble selon l'une quelconque des revendications précédentes, **caractérisé en ce que** ladite portion en creux (3) s'étend, selon ladite direction axiale (X), jusqu'à ladite extrémité libre (24) de ladite partie de montage (22).

4. Ensemble selon l'une quelconque des revendications précédentes, **caractérisée en ce que** ladite portion en creux (3) présente un fond et un bord qui est disposé sous ladite portion de support (12) et **en ce que** la paroi (31) de ladite portion en creux (3) reliant ledit fond audit bord forme une pente comprise entre 50 et 20°, par rapport à ladite direction axiale (X).

## Claims

1. Assembly comprising a wheel (1) and a hub (2), the said wheel comprising, substantially at its centre, a passage (11) which defines an axial direction (X) and which has a cylindrical support portion (12), with the same axis as the said passage (11), the said hub (2) comprising a fixing part (21), designed to be mounted on the end of an axle (5), the said fixing portion (21) being extended in the said axial direction (X) by a mounting part (22) which is inserted in the said passage (11) and which comprises an external surface partially in contact with the said support portion (12) and a free end (24), opposite to the said fixing part (21) in the said axial direction (X), a recessed peripheral portion (3) being formed in the said mounting part (22), **characterized in that** the said recessed portion (3) extends, in the said axial direction (X), from a first region situated under the said support portion (12) as far as a second region situated beyond the said support portion (12) in the direction of the said free end (24), and **in that** the said support portion (12) is of smaller diameter so that it projects into the said passage (11).

2. Assembly according to Claim 1, **characterized in that** the said recessed portion (3) extends, in the said axial direction (X), from substantially the middle of the said support portion (12).

3. Assembly according to either one of the preceding claims, **characterized in that** the said recessed portion (3) extends, in the said axial direction (X), as far as the said free end (24) of the said mounting part (22).

4. Assembly according to any one of the preceding claims, **characterized in that** the said recessed portion (3) has a bottom and an edge which is arranged under the said support portion (12), and **in that** the wall (31) of the said recessed portion (3) connecting the said bottom to the said edge makes a slope of between 50 and 20° with respect to the said axial direction (X).

## Patentansprüche

1. Einheit, die ein Rad (1) und eine Nabe (2) aufweist, wobei das Rad im Wesentlichen in seiner Mitte einen Durchgang (11) aufweist, der eine axiale Richtung (X) definiert und einen zylindrischen Trägerabschnitt (12) von im Wesentlichen gleicher Achse wie der Durchgang (11) aufweist, wobei die Nabe (2) einen Befestigungsbereich (21) aufweist, der geeignet ist, um auf das Ende einer Achse (5) montiert zu werden, wobei der Befestigungsbereich (21) sich in der axialen Richtung (X) durch einen Montagebereich (22) verlängert, der in den Durchgang (11) eingeführt wird und der eine Außenfläche, die teilweise mit dem Trägerabschnitt (12) in Kontakt steht, und ein freies Ende (24) entgegengesetzt zum Befestigungsbereich (21) gemäß dieser axialen Richtung (X) aufweist, wobei ein vertiefter Umfangsabschnitt (3) in dem Montagebereich (22) vorgesehen ist, **dadurch gekennzeichnet, dass** der vertiefte Abschnitt (3) sich gemäß der axialen Richtung (X) von einer ersten Zone, die sich unter dem Trägerabschnitt (12) befindet, bis zu einer zweiten Zone, die sich jenseits des Trägerabschnitts (12) befindet, in Richtung des freien Endes (24) erstreckt, und dass der Trägerabschnitt (12) einen reduzierten Durchmesser hat, um in den Durchgang (11) vorzustehen.

2. Einheit nach Anspruch 1, **dadurch gekennzeichnet, dass** der vertiefte Abschnitt (3) sich von im Wesentlichen der Mitte des Trägerabschnitts (12) gemäß der axialen Richtung (X) erstreckt.

3. Einheit nach einem der vorhergehenden Ansprüche, **dadurch gekennzeichnet, dass** der vertiefte Abschnitt (3) sich bis zum freien Ende (24) des Montagebereichs (22) gemäß der axialen Richtung (X) erstreckt.

4. Einheit nach einem der vorhergehenden Ansprüche, **dadurch gekennzeichnet, dass** der vertiefte Abschnitt (3) einen Boden und einen Rand aufweist, der unter dem Trägerabschnitt (12) angeordnet ist, und dass die Wand (31) des vertieften Abschnitts (3), die den Boden mit dem Rand verbindet, eine Neigung formt, die zwischen 50 und 20° bezüglich der axialen Richtung (X) beträgt.
